(19) Europäisches Patentamt
European Patent Office
Office européen des brevets

(11) **EP 4 069 463 B1**

(12) **EUROPEAN PATENT SPECIFICATION**

(45) Date of publication and mention
of the grant of the patent:
**07.02.2024 Bulletin 2024/06**

(21) Application number: **19821279.7**

(22) Date of filing: **04.12.2019**

(51) International Patent Classification (IPC):
**B23Q 5/10** *(2006.01)*     **B23B 13/02** *(2006.01)*
**B23B 31/117** *(2006.01)*     **B23Q 7/04** *(2006.01)*

(52) Cooperative Patent Classification (CPC):
**B23Q 5/10; B23B 13/021; B23B 31/1173;
B23Q 7/042**

(86) International application number:
**PCT/IB2019/060428**

(87) International publication number:
**WO 2021/111171 (10.06.2021 Gazette 2021/23)**

(54) **DRIVING TOOL FOR CLAMPING AND DRIVING A ROD INVOLVED IN MACHINING OPERATIONS AND METHOD USING THE SAME**

EINTREIBWERKZEUG ZUM SPANNEN UND EINTREIBEN EINES AN BEARBEITUNGSVORGÄNGEN BETEILIGTEN STABES UND VERFAHREN ZU DESSEN VERWENDUNG

OUTIL D'ENTRAÎNEMENT POUR SERRER ET ENTRAÎNER UNE TIGE INTERVENANT DANS DES OPÉRATIONS D'USINAGE ET PROCÉDÉ L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.10.2022 Bulletin 2022/41**

(73) Proprietor: **Haute Ecole Arc
2000 Neuchatel (CH)**

(72) Inventor: **LOEHR, Bernhard
2000 Neuchâtel (CH)**

(74) Representative: **P&TS SA (AG, Ltd.)
Avenue J.-J. Rousseau 4
P.O. Box 2848
2001 Neuchâtel (CH)**

(56) References cited:
**EP-A1- 1 704 950     WO-A1-80/01660
JP-A- 2001 225 215**

## Description

### Technical field

The present invention is directed to an electrical clamping tool used for the machining of rods. More particularly, the tool according to the present invention allows to clamp and drive in rotation the rod to be machined. The main aim of the present tool is to reduce the energy which is currently necessary for such operations. The present invention also covers a machine, such as a lathe, comprising a driving tool here described, as well as a method using the same.

### Background

In the field of the machining of rods, the machines comprise a spindle used to drive in rotation the rod to be machined. The angular speed of the corresponding clamp is currently limited, which limits the machining potential, at least for the rod having small diameters, such as few millimetres. The usual systems are based on pneumatic or hydraulic devices, which need to maintain a leakage of the fluid used to clamp and release the rod to be machined, while maintaining the angular speed of the clamp. The fluid allowed to leak is either compressed air or a pressurized hydraulic fluid, depending on the type of the system. Such systems need to manage the fluid and are thus bulky. In addition, several parts of the usual systems such as the sealing, need to be often replaced due to their wearing. The leakage of the fluid induces an over consumption of the energy. Furthermore, the fluid needs to be treated in order to be circulated in a clos loop, which also requires some energy.

The size of the current system is also a limitation with regard to the precision of the machining operations, at least when the speed increases, or when the dimensions of the machined pieced decreases. There is thus a room for improving the currently used systems.

Some electrical systems are currently used as clutches. For example, the document US2016040733A1 describes such a clutch system selectively connected to a crankshaft, wherein a first clutch member is mounted on the crankshaft and driven by the crankshaft, and a second clutch member is driven by the first clutch member by the means of a wrap spring which allows to engage with, or disengage from, the second clutch member. An electromagnetic unit is used to actuate the wrap spring, and adapt its diameter to establish the connexion between the two clutch members.

Such electromagnetic clutch systems are not adapted to drive a rod to be machined, which is free of any mechanical connexion means.

JP 2001 225215 A discloses a driving tool according to the preamble of claim 1, comprising a first stator, a first rotor rotated by the first stator, a first connexion means driven by the first rotor and a driving element having a first end mechanically connected to the first connexion means and a second end, and further comprising a second stator, a second rotor rotated by the second stator, a second connexion means driven by the second rotor wherein the second connexion means is mechanically connected to the second end of the driving element, wherein the driving element is a hollow element, the axial position of which can be modified according to the relative angular position of its first end and its second end, and in that the relative angular position of the first rotor and the second rotor can vary so as to modify the relative angular axial position of the first connexion means and the driving element for either clamping or releasing the rod.

### Summary

An object of the present invention is to provide a driving tool adapted for the machining of rods, which is more compact and which consumes less energy than the currently used systems.

Another object of the present invention is to provide a driving tool adapted for the machining of rods, which is more efficient, allowing fast angular speeds, and better precision, than the currently used systems.

Another object of the present invention is to provide a machine being cost effective and more adapted for machining pieces of small diameters.

Another object of the present invention is to provide a machining method allowing fast and precise machining operations.

These goals are realized by the means of the driving tool comprising a first stator, a first rotor rotated by the first stator and a first connexion means driven by the first rotor. The driving tool further comprises a second stator, a second rotor rotated by the second stator, and a second connexion means driven by the second rotor. A driving element is connected to these first and second connection means. The driving element may have a first end and a second ends allowing to connect both the first and the second connexion means. The driving element is an elastically deformable, hollow element, the diameter of which can be modified according to the relative angular position of its first and second ends. The relative angular position of the first and the second ends of the driving element can be adapted to clamp or release the rod to be machined by modifying the relative angular position between the first and the second rotors. The claimed driving tool is thus free of circulating fluids, although some lubricant may still be used. The rotation of the rotors is generated by electrical power, using electromagnetic fields. The driving tool according to the present invention is compact and thus more precise for the machining of pieces having small diameter, such as below one centimetre.

The internal diameter of the driving element can vary between several values such as first value and a second value. The first value of the diameter of the driving element may be its natural internal diameter. The second value of the diameter of the driving element may be an extended internal diameter higher than the natural internal diameter. Another value, such a third value may correspond to a shrinked internal diameter of the driving element, lower than its natural internal diameter. The second value of the internal diameter of the driving element results from a variation of the relative angular position between the first and the second rotors to which the driving element is connected, such variation generating an offset between the relative angular position of the ends of the driving element. Optionally, a third value of the internal diameter of the driving element can be obtained by another variation of the relative angular position between the first and the second rotors to which the driving element is connected, such another variation generating another offset between the relative angular position of the ends of the driving element. The relative angular position between the two ends of the driving element may be positive or negative.

The driving element may be a torsion spring.

The variation of the relative angular position of the two ends of the driving element can result from a modulation of one or both of the frequency and the amplitude of the signals sent to at least one of the two stators, or to at least one of the two ensembles of rotor and stator, to which is connected the driving element.

The driving tool according to the present invention may further comprise one or more tightening torque sensors. Alternatively or in addition, the internal surface of the driving element may be provided with an additional layer of material or several additional layers of material, either soft material or hard material. The internal surface of the connexion means to which is connected the driving element may independently be provided with one additional layer or more than one additional layer of material.

The ensemble comprising or consisting of the two connexion means and the driving element may be easily removed from the driving tool so as to be replaced by another ensemble comprising or consisting of connexion means and a driving element having more appropriate dimensions or characteristics. Easily removed means that it can be removed without tools or with a limited number of tools. Easily removed means that the removal, and the replacement of the ensemble, can be performed in a limited time range, such as few minutes, at least less than one hour.

A machine adapted for machining a rod, according to the present invention, may comprise at least two driving tools, allowed to be independently translated one with respect to the other one. The two driving tools may be arranged on a frame, either a common frame or two distinct frames, so as to be coaxially aligned and remain coaxially aligned when translating one with respect to the other one, along an axis corresponding to the longitudinal axis of the rod to be machined. Such a machine may comprise a command unit adapted to pilot each of the driving tools of the machine. Piloting the driving tools includes clamping and releasing the rod, translating one or the other of the driving tools of the machine, optionally determining a clamping force and adapting the clamping force. The command unit may include a frequency modulation unit and an amplitude modulation unit, or may be connected to such frequency modulation unit and amplitude modulation unit.

The method of machining a rode according to the present invention comprises a machining step, wherein the rod is clamped and driven in rotation by a first driving tool, while the first driving tool is translated along the frame in a controlled manner suitable for the machining operations. A second driving tool can meanwhile release the rod, driven by the first riving tool. The method also comprises a feeding step wherein the rod is clamped and driven in rotation by a second driving tool and wherein the second driving tool is translated on the frame so as to feed the rod toward the machining tool. The first driving tool meanwhile releases the rod to let it translate towards the machining tool. The machining step may include an arming step, wherein the second driving tool is translated back along the frame at a reward position, remote from the first driving tool, and suitable to feed the rod toward the machining tool, when translating close to the first driving tool while clamping the rod. One or both of the machining step and the feeding step may include a control step, wherein the actual tightening torque is determined and wherein the applied tightening torque is modulated in response to the determined tightening torque. In this method, at least one of a low threshold value and a high threshold value of the tightening torque can be predetermined, each of the low and high tightening torque value defining an authorized tightening torque. Thus, the applied tightening torque can be limited to the authorized tightening torque defined by one or both of the low threshold value and a high threshold value.

## Brief description of the figures

The present invention will be better explained with the help of the following drawings :

- Fig. 1 : schematic representation of a driving tool according to the present invention,

- Fig. 2 : schematic representation of the translation move of the driving tools in the machining and feeding steps,

- Fig. 3a : schematic sectional representation of the driving element and the corresponding connexion means at a released position,

- Fig .3b : schematic sectional representation of the driving element and the corresponding connexion means at a clamped position,

- Fig.3c : Schematic sectional representation of the driving element and the corresponding connexion means according to another embodiment,

- Fig.3d : Schematic sectional representation of the driving element and the corresponding connexion means according to another embodiment

- Fig. 4 : schematic representation of a driving element clamping a rod,

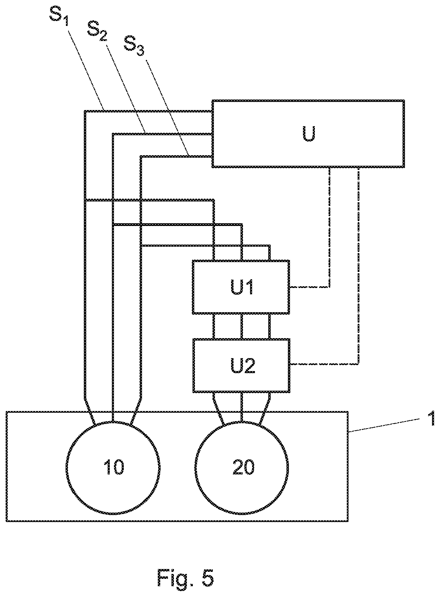

- Fig. 5 : Schematic representation of the command of the two rotors of a given driving tool,

- Fig. 6 : example of the frequency modulation and the amplitude modulation,

**Detailed description of the invention**

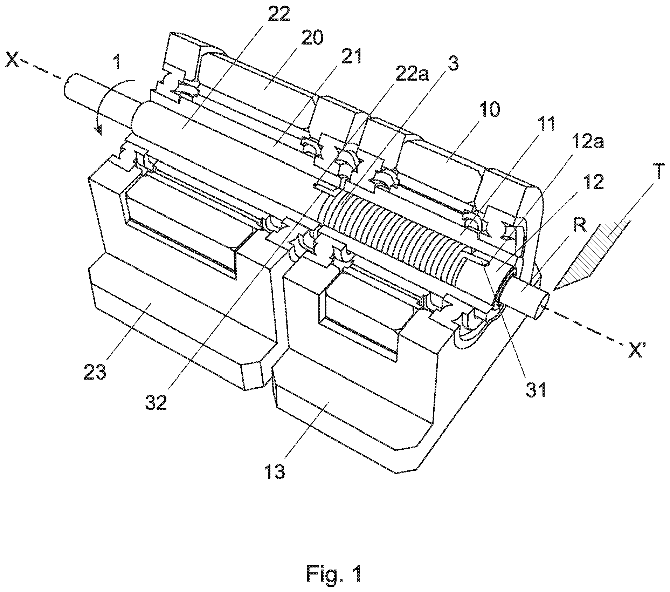

The present invention concerns a driving tool **1** for driving a rod **R** to be machined, as shown in figure 1. Such a driving tool **1** is adapted to be integrated to a machine such as a lathe or a milling or any other machine used to drive a rod in rotation. Such a machine needs to clamp the rod **R** to be machined against a machining tool **T** and to drive the rod **R** in rotation at an angular speed comprised between around 10 000 and around 50 000 tour per minutes, and particular for to angular speed of 15 000, 20 000 or higher. The rod **R** denotes any cylindrical row material, and is preferably involved in some machining steps to provide manufactured pieces having revolution symmetries. Such pieces can be for example some chess pieces. The rod **R** may be of any material such as a metallic row material, including the iron, steel, or any other metallic alloys. The rod **R** may alternatively be of polymeric material, or natural material such a hood. The rod R can have a diameter **RD** of few centimetres. The length of such a rod R may be of several meters, such as between one to 6 meters, or around 3 meters.

To this end, the machine comprises at least one driving tool **1** as described below to clamp and drive the rod **R** according to the manufacturing operations. The driving tool **1** comprises a first stator **10** driving a first rotor **11.** The terms stator and rotor denote an ensemble comprising a mobile part, the rotor, driven in rotation by a fixed part, the stator, wherein the mobile part is concentric to the fixed part. The ensemble comprising a rotor and a stator are for example parts of an electrical motor. One of the rotor and the stator may comprise permanent magnets or electromagnets. Any type of arrangement may be used, which allows to drive a first rotor in rotation. The first rotor **11** can rotate at an angular speed **V1** which is determined at least by the power of the first stator **10** and which can be modulated. The first rotor **11** comprises a central hole, preferably having a cylindrical shape. The central hole of the first stator is symmetrically centred around an axis **XX',** corresponding to the axis of rotation of the first rotor **11.** The first rotor **11** is mechanically connected to a first connexion means **12,** in a way to drive in rotation said first connexion means **12.** The first connexion means **12** comprises a central hole which is symmetrically centred on the axis **XX'.**

According to a preferred arrangement the first connexion means **12** is concentric to the first rotor **11,** meaning that the external surface of the first connexion means **12** is in contact with the internal surface of the first rotor **11** so as to be driven in rotation by the first rotor **11.** Alternative arrangements may however be considered wherein the first connexion means **12** is integral to the first rotor **11.** In yet another arrangement, the first connexion means **12** can protrude from the first rotor **11,** while still being driven in rotation by the first rotor **11.** According to another arrangements, the first connexion means **12** may be removably combined to the first rotor **11** so as to be exchanged by another connexion means having different dimensions. The first connexion means **12** may have the shape of a ring or a tube. Alternative shape such as an openwork ring or openwork tube, an ensemble of several combined parallel rings or any other alternative arrangement having a central hole and adapted to be driven in rotation by the first rotor **11** can be envisaged. The first connexion means **12** may be done in metal or based on a metallic alloy such as brass. Alternatively, polymeric material such as hard plastic polymers or soft plastic polymers, can be used. Independently on the shape and the composition of the first connexion means **12,** it comprises a connexion point **12a** allowing to mechanically connect a driving element **3.** Such a driving element **3** comprises a first end **31** which can be mechanically connected to the first connexion means **12** at the connexion point **12a** of the first connexion means **12.** The driving element **3** has a central hole which is symmetrically centred on the axis **XX'.** The driving element **3** has preferably a hollow cylindrical shape the longitudinal axis of which corresponds to the axis **XX'**. The driving element **3** also has a second end **32**, opposite to the first end **31**.

The second end **32** of the driving element **3** is mechanically connected to a second connection means **22**, having a central hole symmetrically centred on the axis **XX'** and being driven in rotation by a second rotor **21**. The second rotor **21** is itself driven in rotation by a second stator **20**. The second rotor **21** rotates at an angular speed **V2**, which is determined at least by the power of the second stator **21**. The angular speed **V2** can advantageously be modulated. The second connexion means **22** may be identical to the first connexion means **12** or different. It can be for example a tube or a ring, either plain or open worked, or an ensemble of several combined rings. In case one or more of the first connexion means **12** and the second connexion ring **22** is a tube, its internal diameter may be homogenous or not. For example, the internal diameter of such a tube can be lower at its extremities than at its central portion, between its extremities. Alternatively, the internal diameter can form several internal rings in the tube defining an internal diameter smaller than the internal surface of the tube. Independently on the shape and the composition of the second connexion means **22**, it comprises a connexion point **22a** allowing to mechanically connect the second end **32** of the driving element **3**.

The driving element **3** can be removably connected to one or both of the first **12** and the second **22** connection means. For instance, the first **31** and second ends **32** of the driving element **3** can be inserted in a corresponding recess of one or both of the first **12** and the second **22** connexion means. Alternatively, the driving element **3** can comprise at one or both of its first **31** and second **32** ends a hook, adapted to be inserted in a hole provided as a connexion point to one or both of the first **12** and the second **22** connexion means. This allows to easily replace the driving element **3** such as to adapt its size or its properties to the purpose of the machining operation or to the dimensions of the rod **R** to be machined. It is however not excluded that the driving element **3** is integral with one or both of the first **12** and the second **22** connexion means. It can be for example welded or crimped to these connexion means.

According to the present arrangement, the ensemble comprising the first stator **10**, the first rotor **11** and the first connexion means **12** is distinct from the ensemble comprising the second stator **20**, the second rotor **21** and the second connexion means **22**. Each of these two ensemble can be fixed on a dedicated holder, such as a first holder **13**, maintaining the first stator **10**, and a second holder **23**, maintaining the second stator **20**. Alternatively, the first **13** and second **23** holders may be combined in one single holder, while preserving the functional independence of the first **11** and second **12** rotors. The first **13** and second **23** holders are part of the machine used for the machining of the rod **R**. Both the first **13** and the second **23** holders can slide in translation along an axis parallel to the axis **XX'** so as to translate the rod **R** to be machined toward or reward the machining tool **T**.

It should be understood that in the above-described arrangement, all the first connexion means **12**, the second connexion means **22** and the driving element **3** are aligned according to the axis **XX'**. The driving element **3** is placed between the first **12** and the second connexion **22** means so as to be mechanically connected to both of them at its first **31** and second **32** ends. The driving means **3** can thus be driven in rotation by both the first **12** and the second **22** connexion means.

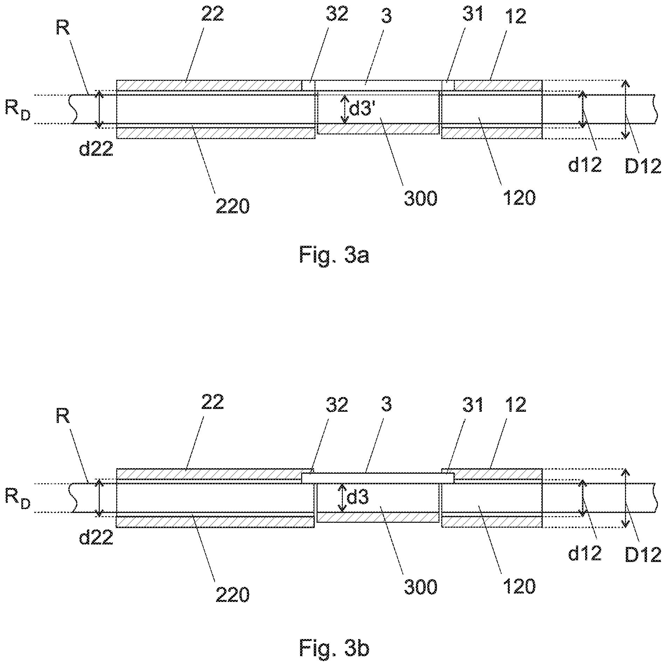

It should also be understood that each of the first **12** and second **22** connexion means and the driving element **3** have a central hole each of them defining the corresponding internal hollow spaces **210**, **300** and **120** (figure 3a, 3b). The first connexion means **12** has for example an internal diameter **d12** and an external diameter **D12**. The external diameter **D12** of the first connexion means **12** can for example correspond to the internal diameter of the first rotor **11** or can be slightly larger than the internal diameter of the first rotor **11** to be engaged by force, thus allowing the rotation of the first connexion means **12** by tight friction with the first rotor **11**.

The second connexion means **22** has for example an internal diameter **d22** and an external diameter **D22**. The external diameter **D22** of the second connexion means **22** can for example correspond to the internal diameter of the second rotor **21** or can be slightly larger than the internal diameter of the second rotor **21** to be engaged by force, thus allowing the rotation of the second connexion means **22** by tight friction with the second rotor **21**.

The internal diameter **d12** of the first connexion means and **d22** of the second connexion means **22** may be identical or different. The internal diameter **d12** and **d22** of the first **12** and second **22** connexion means is predetermined and constant, as well as the external diameters **D12** and **D22** of the first **12** and the second **22** connexion means.

The rod **R** to be machined can slide across the hollow spaces **120** and **220** defined by the first **12** and second **22** connexion means. In other words, the internal diameter **d12** and **d22** of the first **12** and the second **22** connexion means is larger than the diameter **RD** of the rod **R** to be machined. The term "larger" should be here understood as allowing the rod **R** to slide either in rotation or in translation across the internal space **210** and **120** of the corresponding connexion means **12** and **22**. A smooth contact between the rod **R** and the connexion means **12**, **22** is allowed providing that such a contact does not prevent the free movement of the rod **R** with regard to these connexion means **12**, **22**. This is to say that the first **12** and the second **22** connexion means allow to guide the rod **R** along the longitudinal axis **XX'**. For example, the internal diameter **d12** of the first connexion means **12**, and the internal diameter **d22** of the second connexion means **22** may be larger than the diameter of the rod **RD** by an amount equal or below 2%, or equal or below 5% or equal or below 10%. Other specific relative dimensions between the diameter **RD** of the rod and the internal diameter **d12**, **d22** of the first **12** and the second **22** connexion means may be considered depending on the needs. The diameter **RD** of the rod **R** is typically comprised between 0,1 cm and 20 cm, preferably between 2 or 3 cm and 10 cm.

A thin rod **R** having a diameter **RD** below 1 cm, such as around 0,8 cm, or 0.5 cm or below, is also well machined using the present invention.

The driving element **3** has a natural internal diameter **d3**. The natural internal diameter **d3** of the driving element **3** preferably corresponds to its internal diameter in absence of any opposite angular forces applied to each of its first **31** and second **33** ends. The natural internal diameter **d3** of the driving element **3** is lower than both of the internal diameter **d12** of the first connexion means **12** and internal diameter **d22** of the second connexion means **22,** as shown in figure 3b. According to this configuration, the driving element **3** can naturally clamp the rod **R** to be machined.

The driving element **3** is elastically deformable in such a way that its internal diameter can be increased from its natural value **d3** to a higher value **d3'** as shown in figure 3a to obtain an extended internal diameter **d3'**. The value of the extended internal diameter **d3'** of the driving element **3** may be equal or different from one or both of the internal diameter **d12** of the first connexion means **12** and **d22** of the second connexion means **22**. The driving element **3** may in addition be elastically deformable in a way that its internal diameter decreases to a value lower than the value of its natural internal diameter **3d.** This is particularly convenient in case a grip of the rod **R** stronger than the natural grip provided by the natural diameter **3d** of the driving element **3** is necessary.

The natural internal diameter **d3** of the driving element **3** is predetermined to be equal or lower than the diameter **RD** of the rod **R** to be machined. In consequence, the rod **R,** once placed across the internal space **300** of the driving element **3,** when its internal diameter corresponds to its natural internal diameter **d3,** cannot slide any more. The extended internal diameter **d3'** of the driving element **3** is determined to be higher than the diameter **RD** of the rod **R,** so as to allow the rod **R** to slide across the internal space **300** of the driving element **3**. In consequence, the rod **R** can be driven in rotation by the means of the driving element **3** in absence of forces applied to the first **31** and the second **32** ends of the driving element **3**. The elastic force of the driving element **3** naturally clamps the rod **R** and allows to drive the rod **R** in rotation when both of the first **11** and second **21** rotors are rotated at the same angular speed **V,** without generating angular offset between the first **31** and the second **32** ends of the driving element **3**. When the internal diameter of the driving element **3** is increased to a higher value until an extended value **d3',** the friction between the rod **R** and the internal surface of the driving element **3** decreases, resulting in the decrease of the driving force involved in the rotation of the rod **R,** or resulting in the absence of such a driving force. The extended internal diameter **d3'** can be for example larger than the natural internal diameter **d3** by an amount of less than 1%, less than 5%, or less than 10%. The tightening torque of the driving element **3** may be decreased by an amount of more than 50%, more than 70%, preferably more than 95% when the internal diameter of the driving element **3** increases up to its extended value **d3'**. According to an aspect, the tightening torque of the driving element **3** significantly decreases although the extended internal diameter **d3'** remains close to the natural internal diameter **d3**. For example, the internal extended diameter **d3'** can be larger than the natural internal diameter **3d** by an amount of less than 3% while the tightening torque decreases by an amount of more than 80%, or more than 90%, or by an amount of around 100%. It is here noted that the difference of the tightening torque between the natural internal diameter **d3** and the extended diameter **d3'** is independent from the diameter of the rod **RD** since it remains constant.

It is also considered that the natural internal diameter **3d** of the driving element **3** is larger than the diameter **RD** of the rod **R,** in such a way to allow a stronger tightening effect of the driving element **3** on the rod **R** by lowering its internal diameter at a value below its natural internal diameter **3d.**

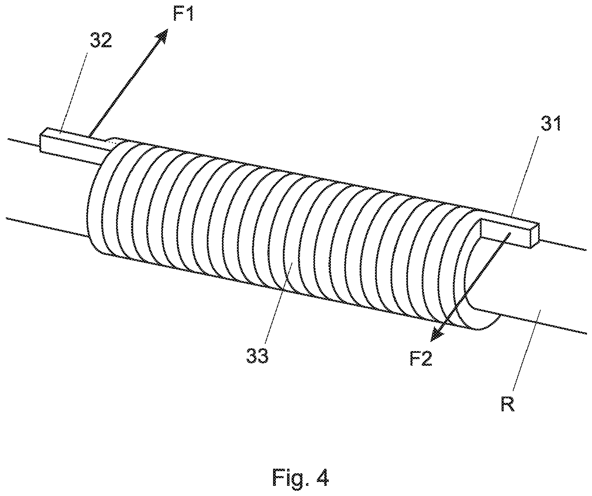

The variation of the internal diameter of the driving element **3** from its natural value **d3** to its higher value **d3'** is obtained by the application of two opposite forces **F1** and **F2,** on each of the first **31** and the second **32** ends of the driving element **3,** as shown in figure **4**. Such opposite forces **F1** and **F2** are generated by a variation of the relative angular position of one of the first **11** and second **21** rotors with respect to the other, thus modifying the relative angular position of the first **12** and second **22** connexion means. The modification of the relative angular position of the first **12** and second **22** connexion means generates in consequence an offset between the first end **31** and the second end **32** of the driving element **3**. The relative angular position of the first **12** and the second **22** connexion means can be for example characterized by the relative position of the first connexion point **12a** of the first connexion means **12,** compared to the connexion point **22a** of the second connexion means **22**. The first connexion point **12a** and the connexion point **22** may for example be aligned along an axis parallel to the axis XX'. In this case, the offset between the first end **31** and the second end **32** of the driving element **3** is null. The relative angular position of the first **12** and the second **22** connexion means may vary by an angle comprised between 1° and 20°, or by an angle comprises between 5° and 15°, or by an angle around 10°, thus generating a corresponding offset between the first end **31** and the second end **32** of the driving element **3**. It is understood that the value of such an offset depends for example on the characteristics of the driving element **3** and on the tightening torque which is targeted.

It is to be understood that a negative offset is also considered to increase the tightening torque of the rod **R** by the driving element **3**. A negative offset off around -1° to -10°, preferably from around - 1° to - 5° is for example applicable.

It is noted that the relative angular position between the first end **31** and the second end **32** of the driving element **3** corresponds to the relative angular position of the first **11** and the second **21** stator, which also corresponds to the relative angular position of the first **12** and the second **22** connexion means. It can thus be designated as the relative angular position.

It is also to be understood that the offset between the first end **31** and the second end **32** of the driving element **3** denotes a variation of the relative angular position, and that it can be designated as the offset. The offset is determined by an angle value.

Although the first **11** and the second **21** rotors are still in rotation, driving the first **21** and the second **22** connection means, the driving element **3** is no longer able to drive the rod **R** to be machined when its diameter reached a value higher than its natural diameter **d3.**

According to an embodiment, the relative angular position can reach predetermined specific values, corresponding to one or more predetermined offsets such as 0°, 5°, 10°, 20° or more. The relative angular position can thus vary to increase the offset from an initial value to one or more targeted values, such as from 0° to 5°, or from 0° to 10°. This can correspond to a dual mode comprising a clamping position and a release position of the driving element **3,** and optional one or several predetermined intermediate positions. Alternatively, the relative angular position may vary progressively and take any intermediate values between a first value and a final value. For example, the offset may continuously vary from 0° to 5°, or from 0° to 10°. This corresponds to a progressive mode allowing to modulate the tightening torque of the driving element **3** from a maximal value to a minimal value.

The dual mode as well as the progressive mode explained above may be applied to negative offsets if necessary.

Whether a dual mode or a progressive mode is applied, the driving tool **1** may be provided with a means to determine the tightening torque actually applied. Such a means may comprise a pressure sensor adapted to determine the pressure of the driving element **3** onto the rod **R,** an electrical consumption sensor adapted to determine the effort of at least one of the first **12** or the second **22** rotor, or any other suitable sensor. The actual tightening torque may thus be adapted according to predetermined parameters. Such predetermined parameters include for example the material of the rod **R** to be machined, or one of its characteristics like its hardness. Such arrangement can also be used to set up some tightening torque limitation, thus preventing the tightening torque reaching a predetermined threshold value.

In case a stronger tightening torque is necessary, the relative angular position can be modulated so as to decrease the internal diameter of the driving element **3.** A negative offset can then be obtained to shrink the driving element **3.** The friction force between the driving element **3** and the rod **R** to be machined then increases. If the driving element **3** is an elastic sleeve, made for example in silicon or in rubber, or if it is made of fabric either woven or nonwoven, such a negative offset may be more suitable. In case the driving element **3** has already a strong natural tightening force, in case it is for example a torsion spring, a negative offset may also be advantageous to increase the tightening torque of the rod **R** at a value significantly higher than the machining resistance provided by the machining tool **T.**

Preferably, the offset is null when the internal diameter of the driving element **3** as the value of the natural internal diameter **3d.** The offset is negative when the internal diameter of the driving element **3** is lower than its natural internal diameter **3d.** The offset is positive when the internal diameter of the driving element **3** is higher than its natural internal diameter **3d.** The offset may be maximal when the internal diameter of the driving element **3** reaches its extended value **3d'.**

According to a preferred embodiment, the driving element **3** denotes a torsion spring **33,** having a predetermined number of coils, such as 3 to 30 coils, or from 5 to 20 coils. The natural internal diameter **d3** of such a torsion spring **33** is predetermined to be the same as the diameter **RD** of the rod **R** to be machined or even below. The tightening torque **Q** of such a torsion spring **33** may be defined according to the following equation (E1)

$$(E1) \qquad Q = [(RD^2 - d3^2)/(RD \cdot d3^2)]\, EI(e^{\mu\alpha} - 1)$$

Wherein

Q denotes the tightening torque,
RD denotes the diameter of the rod R to be machined,
d3 denotes the natural internal diameter of the compression spring,
E denotes the Young module of the steel of the compression spring
I denotes the quadratic moment of the section of the compression spring,
$\mu$ denotes the friction coefficient, and
$\alpha$ denotes the winding angle

According to the equation (E1), the tightening torque **Q** can be improved when the number of coils increases, since the other parameters remain constant.

On the contrary, the loosing torque L to be applied to the compression spring **33** is defined by the equation (E2) below:

$$(E2) \quad L = [(RD^2-d3^2)/(RD. d3^2)] \, EI$$

Wherein the terms RD, d3, E and I are as above defined for the equation (E1).

The loosing torque **L** does not depend on the number of coils of the torsion spring **33.** The number of coils of the torsion spring **33** can thus be determined according to the tightening torque **Q** which is required to drive the rod **R** in rotation. Such tightening torque **Q** should be higher than the machining resistance provided by the machining tool **T** against the rotation of the rod **R.** Such machining resistance may vary for instance with the material of the rod **R** to be machined.

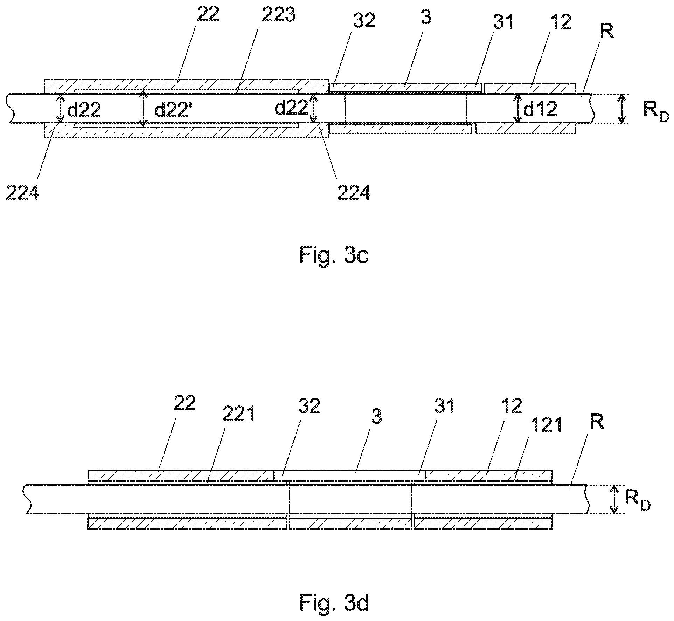

Although the internal surface of the first **11** and the second **21** connexion means, as well as one of the driving element **3,** is described above without any additional element, one or more of these connexion means and driving element **3** may be provided with a layer or several layers arranged on their internal surface. Figure 3d shows an example wherein the internal surface of the first connexion means **12** is provided with a protective layer **121,** and the internal surface of the second connexion means **22** is also provided with a protective layer **221,** either of the same nature as the protective layer **121** of the first connexion means **12** or of different nature. Although the internal surface of the driving element **3** is free, this does not excludes that the internal surface of the driving element **3** is also provided with a protective layer. The driving element **3** can for example comprise a protective layer allowing to prevent the wearing of the driving element **3.** Such protective layer may be for example an elastic soft material, such as rubber, covering the complete internal surface of the driving element **3.** Alternatively, several bands of such a protective material may be placed on the internal surface of the driving element **3.** The protective layer combined with the driving element may in addition provide a better grip of the rod **R** to be driven. A polymer material, either natural or synthesized material, can thus be used to optimize the grip of the rod **R** and then allowing to reduce the natural tightening torque of the driving element **3.** The protective layer, if any, is advantageously soft enough to prevent any damages to the external surface of the rod **R.** Alternatively, in case the surface of the rod **R** is not to be preserved because it will be machined anyway, the internal surface of the driving element **3** may be provided with a hard gripping material such as a harrow, or a metallic relief.

The internal surface of one or both of the connexion means **12, 22,** may also be provided with a soft layer, used for example as a guide, without preventing the rod **R** to slide. Thus the rod **R** is maintained, even in the case it is not driven by the driving tool **1.** Such guide can take the form of a ring or an ensemble of rings. Figure 3c shows an example wherein the second connexion means **22** comprises circular internal protrusions **224** defining a low internal diameter **d22,** which operates as a guide for the rod **R,** and an internal recess **223** defining a larger internal diameter **d22',** which provides an internal free space **223** between the rod **R** and the internal surface of the second connexion means **22.**

According to an embodiment, the ensemble consisting of the first connexion means **12,** the second connexion means **22** and the driving element **3** is firmly integrated to the driving tool **1,** such as not being easily removed. The driving tool **1** is then adapted to some rods **R** having a given diameter or a limited range of diameters. It is however advantageous that the driving tool **1** is adaptable to a larger variety of row material. To this end, the ensemble consisting of the first connexion means **12,** the second connexion means **22** and the driving element **3** is removably arranged within the driving tool **1.** The first **12** and second **22** connexion means can for example be screwed or manually clamped on the corresponding first **10** and second **20** rotors, or on an intermediate holder integral with the corresponding rotor. A set of several ensembles, each comprising a driving element **3** and a first **12** and a second **22** connexion means, and having specific dimensions or properties, can be used for an improved modularity of the driving tool **1,** depending on the nature of the row material to be machined or the dimeter of the rod **R.**

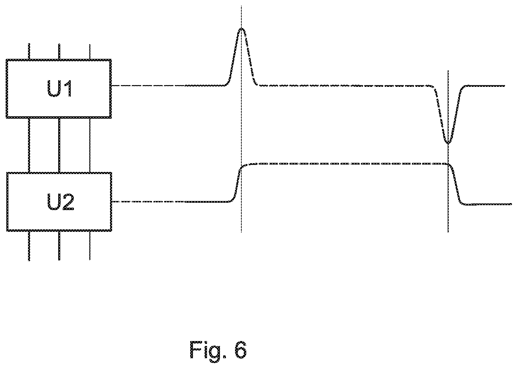

The driving tool **1** according to the present invention is activated by the means of a command unit **U.** In particular, the command unit **U** supplies the power to the first **10** and to the second **20** stators to drive in rotation the first **11** and the second **21** rotors. The command unit **U** sends to the first **10** and the second **20** stators the signals necessary to drive in rotation the corresponding first **11** and second **21** rotors. Figure 6 shows an example of the possible arrangements. For example, three sinusoidal signals **51, 52** and **S3** may be sent to the first **10** and the second **20** stators. For example, the first S1, second S2 and third S3 sinusoidal signals may be defined as follows:

$$S1 = A_0 \sin(wt)$$

$$S2 = A_0 \sin(wt + 2\pi/3)$$

$$S3 = A_0 \sin(wt + 4\pi/3)$$

Wherein

$A_0$ denotes the standard vector of the rotating field
w denotes the frequency, and
t denotes the time.

The rotors are rotated by the stator thanks to a rotating field supplied to each of the stators. The signal sent to each of the stator may be an ensemble of sinusoidal signals **51, S2** and **S3** having a predetermined frequency, and a predetermined amplitudes. The command unit **U** may thus be adapted to modulate either the frequency or the amplitude or both the frequency and the amplitude of the sinusoidal signals sent to at least one of the first **10** and the second **20** stators so as to induce an offset. The command unit **U** comprises to this end a frequency modulation unit **U1** used to modulate the frequency of the sinusoidal signals supplied to at least one of the first **10** and the second **20** stators. The command unit **U** comprises an amplitude modulation unit **U2** used to modulate the amplitude of the sinusoidal signals supplied to at least one of the first **10** and the second **20** stators. The command unit **U** may in addition be connected to one or more sensors, including the sensors allowing to determine the tightening torque of the driving element **3**.

According to an embodiment, the frequency of the signals sent to the first stator **10** of the driving tool **1** are modulated while the frequency of the signal sent to the second stator **20** of the same driving tool **1** remains unchanged. The relative angular position of the first **11** and the second **21** rotors is then modified. The frequency modulation can induce either a phase advance or a phase delay of the first rotor **11** with regard to the second rotor **21** depending on the arrangement of the driving element **3**.

According to another embodiment, the frequency of the signals sent to the second stator **20** are modulated while the frequency of the signals sent to the first stator **10** remains unchanged. The frequency modulation can induce either a phase advance or a phase delay of the second rotor **21** with regard to the first rotor **11** depending on the arrangement of the driving element **3**.

According to another embodiment, the frequency of the signals sent to the second stator **20** as well as those sent to the first stator **10** are modulated. The frequency modulation can induce a phase advance of the second rotor **21** and a phase delay of the first rotor **11,** or reversely a phase delay of the second rotor **21** and a phase advance of the first rotor **11** depending on the characteristics of the driving element **3**.

The amplitude of the signals determines the torque applied to the driving element **3** by the corresponding rotor. The relative amplitude between the first and the second stators can be modified so as to apply a differential torque to the ends of the driving element. Such differential amplitude allows for example to open the driving element **3** for releasing the rod **R.**

According to an embodiment, the command of the relative angular position comprises the variation of the electrical power supplied to the first and the second rotor of the driving tool.

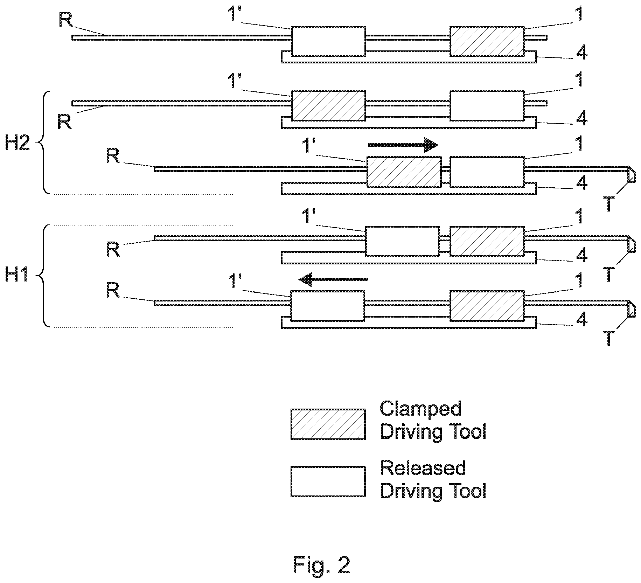

The present invention is also directed to a machine **M** comprising at least one driving tool **1,** as described above, as shown in figure 2. According to a preferred embodiment, the machine **M** comprises a first driving tool **1** and a second driving tool **1'** aligned with the first driving tool **1** according to the axis **XX'**. The second driving tool **1'** comprises a first connexion means **12'** with a first connexion point **12a'**, a second connexion means **22'** having a connexion point **22a',** and a driving element **3'** having a first end **31'** and a second end **32'** mechanically connected to the corresponding connexion means **12', 22'**. Each of the first **1** and the second **1'** driving tools can independently slide along a frame **4** in the direction defined by the axis **XX'**. For example, the first **13** and second **23** holders of each of the first **1** and the second **1'** driving tools can be arranged on one or more rails to be translated in the direction of the machining tool **T** or to the opposite direction along the axis **XX'**. The first **1** and the second **1'**the driving tools may be moved in a controlled manner along the frame **4** by the means of one or more actuators. Such actuators can advantageously by connected to the command unit **U,** so as to be automatically driven. The second driving tool **1'** is connected to the command unit **U.**

The first **1** and the second **1'** driving tools of the present machine **M** are adapted to clamp a same rod **R,** either simultaneously or alternatively. The first **1** and the second **1'** driving tools are advantageously used to alternatively clamp a given rod **R.** For example, the first driving tool **1** may be placed near the machining tool **T** and drive the rod **R** in rotation so as to be machined, while the second driving tool **1'** remains open, meaning that the rod **R,** driven by the first driving tool **1** is free with regard to the driving element **3'** of the second driving tool **1'**. The first driving tool **1** is meanwhile able to move in translation along the frame **4** to control the position of the rod **R** with regard to the machining tool **T** during the machining operations.

The second driving tool **1',** placed remote the machining tool **T,** can then clamp the rod **R,** while the first driving tool **1** releases the rod **R.** The second driving tool **1'** is then able to slide the rod **R** across the first driving tool **1** so as to place its extremity close to the machining tool **T.** Once the rod **R** is in good place for additional machining operations, the first driving tool **1** clamps the rod **R** while the second driving tool **1'** releases the rod **R.**

The first **1** and the second **1'** driving tools can thus be alternatively activated to provide an inchworm type progression.

The command unit **U** is adapted to alternatively modulate the signals sent to the first **1** and to the second **1'** driving tools in order to alternatively clamp and release the rod **R** during the machining operations.

The present invention further relates to a process of machining a rod **R** using a driving tool **1** as described above, preferably two driving tools according to the present description, as shown in figure 2. The process of machining a rod **R** comprises the machining step **H1** of driving a rod **R** in rotation while the rod **R** is in contact with a machining tool **T**. During the machining step **H1**, the rod **R** is driven in rotation by the means of a driving tool **1,** wherein the driving element **3** is clamped on the rod **R**. The driving force is predetermined to be higher than the machining resistance provided by the machining tool **T**. In case the driving element **3** is a torsion spring **33**, the tightening torque **Q** is preferably adapted to drive the rod **R** in rotation against the machining resistance. The first **12** and the second **22** rotors of the driving tool **1** are rotated at the same angular speed **V** corresponding to the angular speed of the rod **R** during the machining operations. Such angular speed **V** may be comprised between around 10 000 and around 20 000 round per minute, or be higher than 20 000 rounds per minutes. The relative angular position is determined so as to let the driving element **3** clamping the rod **R**. The driving element **3** being configured to naturally clamp the rod **R,** no additional tightening torque is normally necessary. Alternatively, in case a more intense tightening torque is necessary, the relative angular position may vary so as to increase the tightening torque **Q** of the driving element **3** on the rod **R**.

Such increase of the tightening torque **Q** is obtained when one or both of the frequency and the amplitude of the sinusoidal signals **51, S2, S3** provided by the command unit **U** is modulated so as to decrease the internal diameter **d3** of the driving element **3**. This additional shrinking force is generated by the appropriate action of one or both of the frequency modulation unit **U1** and the amplitude modulation unit **U2**.

During the machining step **H1**, the driving tool **1** is allowed to move in translation on the frame **4** along the direction of the axis **XX'** at a translation speed adapted to the machining speed. In case more than one driving tool **1** is involved, the first driving tool **1,** close to the machining tool **T** is preferably driving the rod **R** in rotation and in translation, while the second driving tool **1'** remains dissociated from the rod **R**. To this end, the relative angular position of the first connexion point **12a'** of the first connexion means **12'**, and the connexion point **22a'** of the second connexion means **22'** of the second driving tool **1'** is modulated by the command unit **U** in a way to increase the internal diameter of the corresponding driving element **3'**. Such diameter increase may allow to reach the extend diameter **d3'**. This releasing force is generated by the appropriate action of one or both of the frequency modulation unit **U1** and the amplitude modulation unit **U2**.

At the end of the machining step **H1,** the portion of the rod **R** which has been machined is cut by the action of the machining tool **T** to provide a machined piece. The remaining part of the rod **R** can then be supplied close to the machining tool **T** in a feeding step **H2**. In the feeding step **H2**, the second driving tool **1'**, remote from the machining tool **T,** and initially placed at a distance from the first driving tool **1,** clamps the rod **R** while the first driving tool **1** releases it. The clamping of the rod **R** by the second driving tool **1'** is performed similarly to the clamping of the rod **R** by the first driving tool **1**. The driving element **3'** of the second driving tool **1'** is allowed to naturally tight the rod **R**. In other word, the command unit **U** provides the same sinusoidal signals to the first **10'** and the second **20'** stators of the second driving tool **1'**. While the second driving tool **1'** clamps the rod **R**, it is translated on the frame **4** along the axis **XX'** on a distance adapted to initiate the machining operations with the machining tool **T**. The second driving tool **1'** comes closer to the first driving tool **1**. It can even arrive in contact to the first driving tool **1**. In other words, the extremity of the rod **R** resulting from the machining step **H1** is translated near the machining tool **T** to allow a new machining step **H1**. During the feeding step **H2,** the first driving tool **1** may also be translated on the frame **4,** to reach a predetermined place. Such a predetermined place may be for example the place at which the machining step **H1** should start. Alternatively, the translation of the first driving tool **1** is performed either before or after the translation of the second driving tool **1'**. A new machining step **H1** can thus be initiated, wherein the first driving tool **1** is driving the rod **R** in rotation, and wherein the second driving tool **1'** has released the rod **R,** by the appropriate modulation of the sinusoidal signals.

The machining step **H1** may include an arming step **H3,** wherein the second driving tool **1'** is translated back along the frame **4** at a position adapted to prepare the feeding of the rod **R** toward the machining tool **T**. While maintained non-tightened to the rod **R,** which is under some machining operations, the second driving tool **1'** reaches a position apart from the first driving tool **1.**

Any one or both of the machining step **H1** and the feeding step H2 may include a control step **H4,** wherein the tightening torque is determined and wherein the applied tightening torque is modulated. One or more tightening torque values may be predetermined as thresholds. For example, a low tightening threshold may be determined and used as an indication that the tightening torque is not sufficient for machining the rod **R,** or for safely maintaining the rod **R** during its machining operations. When the lower tightening threshold is detected, a signal may be sent to the user, such as an error signal or a warning signal, either visual or audio, or both visual and audio. Alternatively or in addition, the machine **M** may be stopped for safety reasons until the user fixes the lack of tightening torque. A higher tightening threshold may alternatively or in addition be predetermined so as to prevent potential damages on the surface of the rod **R,** due to an excessive tightening torque **Q**. The command unit **U** thus compares the tightening torque **Q** applied to the rod **R** with one or two of the low and high tightening thresholds, and commands the first **1** and the second **1'** driving tools accordingly.

It should be noted than the machining step **H1** and the feeding step **H2** are alternatively performed until the length of the rod **R** no longer allows further machining operations. It is also noted that during all the sequence of alternative machining steps **H1** and feeding steps **H2,** the angular speed of the rod **R** remains constant, being driven in rotation either by the first **1** or by the second **1'** driving tools, or by both the first **1** and the second **1'** driving tools. It is further noted that while one of the first **1** and second **1'** driving tools releases the rod **R,** their corresponding driving element **3, 3'** are maintained in rotation at a speed corresponding to the angular speed of the rod **R,** or close to the angular speed of the rod **R.** Such an arrangement allows to improve the speed and the quality of the machining process, since no significant variation of the angular speed occurs.

**Reference numbers**

| | |
|---|---|
| 1 | Driving tool |
| 10 | First stator |
| 11 | First rotor |
| 12 | First connexion means |
| 120 | Internal space of the first connexion means |
| 121 | Protective layer |
| 12a | Connexion point |
| 13 | First holder |
| 20 | Second stator |
| 21 | Second rotor |
| 22 | Second connexion means |
| 220 | Internal space of the second connexion means |
| 221 | Protective layer |
| 224 | Internal protrusion |
| 22a | Second connexion point |
| 23 | Second holder |
| 3 | Driving element |
| 31 | First end |
| 32 | Second end |
| 300 | Internal space of the driving element |
| d12 | Internal diameter of the first connexion means |
| D12 | External diameter of the first connexion means |
| d21 | External diameter of the second connexion means |
| D21 | External diameter of the second connexion means |
| d3 | Natural internal diameter of the driving element |
| d3' | Extended internal diameter of the driving element |
| R | Rod |
| RD | Diameter of the rod |
| T | Machining tool |
| XX' | Axis of rotation |

**Claims**

**1.** A driving tool (1) for driving a rod (R) in rotation, comprising a first stator (10), a first rotor (11) rotated by the first stator (10), a first connexion means (12) driven by the first rotor (11) and a driving element (3) having a first end (31) mechanically connected to the first connexion means (12) and a second end (32),
**characterized in that** it further comprises a second stator (20), a second rotor (21) rotated by the second stator (20), a second connexion means (22) driven by the second rotor (21) wherein the second connexion means (22) is mechanically connected to the second end (32) of the driving element (3), **in that** the driving element (3) is an elastically deformable hollow element the diameter of which can be modified according to the relative angular position of its first end (31) and its second end (32), and **in that** the relative angular position of the first rotor (11) and the second rotor (21) can vary so as to modify the relative angular position of the first end (31) and the second end (32) of the driving element (3).

**2.** Driving tool according to claim 1, **characterized in that** the internal diameter of the driving element (3) can vary between a first value and a second value.

3.  Driving tool according to claim 2, **characterized in that** the first value of the diameter of the driving element (3) is its natural internal diameter (d3), and that the second value corresponds to an extended internal diameter (d3') higher than the natural internal diameter (d3).

4.  Driving tool according to claims 2 or 3, **characterized in that** the second value of the internal diameter of the driving element (3) results from a variation of the relative angular position the first rotor (11) and the second rotor (21).

5.  Driving tool according to any one of claim 1 to 5, **characterized in that** the natural internal diameter (d3) of the driving element (3) is equal or lower than the diameter (RD) of the rod (R).

6.  Driving tool according to any one of claims 1 to 5, **characterized in that** the driving element (3) is a torsion spring.

7.  Driving tool according to any one of claims 1 to 6, **characterized in that** the variation of the relative angular position of the first (31) and the second (32) end of the driving element (3) results from a modulation of one or both of the frequency and the amplitude of the signals sent to at least one of the first (10) and the second (20) stators.

8.  Driving tool according to any one of the claims 1 to 7, **characterized in that** it further comprises at least one tightening torque sensor.

9.  Driving tool according to any one of claims 1 to 8, **characterized in that** the internal surface of one or more of the driving element (3), the first connexion means (12) and the second connexion means (22) is provided with an additional layer.

10. Driving tool according to any one of claims 1 to 9, **characterized in that** the ensemble of the first connexion means (12) the second connexion means (22) and the driving element (3) can be manually removed from the driving tool (1).

11. A machine (M) adapted for machining a rod (R), **characterized in that** it comprises a first (1) and a second (1') driving tools according to claims 1 to 8, coaxially arranged on a holder (4) so as to be able to independently slide on the holder (4) along the longitudinal axis XX' corresponding to the longitudinal axis of the rod (R).

12. Machine according to claim 11, **characterized in that** it further comprises a command unit (U), adapted to control at least one of said first (1) and second (1') driving tools.

13. Machine according to claim 12, **characterized in that** said command unit (U) comprises or is connected to a frequency modulation unit (U1) and comprises or is connected to an amplitude modulation unit (U2).

14. Method for machining a rod (R) wherein the rod (R) is alternatively driven in rotation by a first and a second driving tool and fed to a machining tool (T), the method comprising :

    - a machining step (H1), wherein the rod (R) is clamped and driven in rotation by the first driving tool (1), while being released by the second driving tool (1'), and wherein the first driving tool (1) is translated along the frame (4) in a controlled manner suitable for the machining operations,
    - a feeding step (H2), wherein the rod (R) is clamped and driven in rotation by the second driving tool (1'), while being released by the first driving tool (1), and wherein the second tool (1') is translated on the frame (4) so as to feed the rod (R) toward the machining tool (T),

    wherein each of the first (1) and the second (1') driving tools comprises a first stator (10), a first rotor (11) rotated by the first stator (10), a first connexion means (12) driven by the first rotor (12), a second stator (20), a second rotor (21) rotated by the second stator (20), a second connexion means (22) driven by the second rotor (21), and an elastically deformable driving element (3), connected to the first connexion means (12) and to the second connexion means (22), and wherein the release of the rod (R) results from an offset of the relative angular position of the first (11) and the second (12) rotors.

15. Method according to claim 14, **characterized in that** the machining step (H1) includes an arming step (H3), wherein the second driving tool (1') is translated back along the frame (4) at a position adapted to feed the rod (R) toward the machining tool (T) during a feeding step (H2).

16. Method according to claims 14 or 15, **characterized in that** one or both of the machining step (H1) and the feeding step (H2) includes a control step (H4), wherein the actual tightening torque is determined and wherein the applied tightening torque is modulated in response to the determined tightening torque.

17. Method according to claim 15 to 16, **characterized in that** at least one of a low threshold value and a high threshold value of the tightening torque is predetermined, each of the low and high tightening torque value defining an authorized tightening torque, and **in that** the applied tightening torque is limited to the authorized tightening torque.

**Patentansprüche**

1. Antriebswerkzeug (1) zum Antreiben einer Stange (R) in Rotation, mit einem ersten Stator (10), einem ersten Rotor (11), der durch den ersten Stator (10) in Rotation versetzt wird, einem ersten Verbindungsmittel (12), das durch den ersten Rotor (11) angetrieben wird, und einem Antriebselement (3) mit einem ersten Ende (31), das mechanisch mit dem ersten Verbindungsmittel (12) verbunden ist, und einem zweiten Ende (32), **dadurch gekennzeichnet, dass** es ferner einen zweiten Stator (20), einen zweiten Rotor (21), der durch den zweiten Stator (20) in Drehung versetzt wird, und ein zweites Verbindungsmittel (22) umfasst, das durch den zweiten Rotor (21) angetrieben wird, wobei das zweite Verbindungsmittel (22) mechanisch mit dem zweiten Ende (32) des Antriebselements (3) verbunden ist, dass das Antriebselement (3) ein elastisch verformbares Hohlelement ist, dessen Durchmesser in Abhängigkeit von der relativen Winkelstellung seines ersten Endes (31) und seines zweiten Endes (32) verändert werden kann, und dass die relative Winkelstellung des ersten Rotors (11) und des zweiten Rotors (21) variieren kann, um die relative Winkelstellung des ersten Endes (31) und des zweiten Endes (32) des Antriebselements (3) zu verändern.

2. Antriebswerkzeug nach Anspruch 1, **dadurch gekennzeichnet, dass** der Innendurchmesser des Antriebselements (3) zwischen einem ersten Wert und einem zweiten Wert variieren kann.

3. Antriebswerkzeug nach Anspruch 2, **dadurch gekennzeichnet, dass** der erste Wert des Durchmessers des Antriebselements (3) sein natürlicher Innendurchmesser (d3) ist und dass der zweite Wert einem erweiterten Innendurchmesser (d3') entspricht, der höher ist als der natürliche Innendurchmesser (d3).

4. Antriebswerkzeug nach Anspruch 2 oder 3, **dadurch gekennzeichnet, dass** der zweite Wert des Innendurchmessers des Antriebselements (3) aus einer Veränderung der relativen Winkelstellung des ersten Rotors (11) und des zweiten Rotors (21) resultiert.

5. Antriebswerkzeug nach einem der Ansprüche 1 bis 5, **dadurch gekennzeichnet, dass** der natürliche Innendurchmesser (d3) des Antriebselements (3) gleich oder kleiner als der Durchmesser (RD) der Stange (R) ist.

6. Antriebswerkzeug nach einem der Ansprüche 1 bis 5, **dadurch gekennzeichnet, dass** das Antriebselement (3) eine Torsionsfeder ist.

7. Antriebswerkzeug nach einem der Ansprüche 1 bis 6, **dadurch gekennzeichnet, dass** die Veränderung der relativen Winkelstellung des ersten (31) und des zweiten (32) Endes des Antriebselements (3) aus einer Modulation der Frequenz und/oder der Amplitude der Signale resultiert, die an mindestens einen der ersten (10) und zweiten (20) Statoren gesendet werden.

8. Antriebswerkzeug nach einem der Ansprüche 1 bis 7, **dadurch gekennzeichnet**, ferner umfassend mindestens einen Anzugsmomentsensor.

9. Antriebswerkzeug nach einem der Ansprüche 1 bis 8, **dadurch gekennzeichnet, dass** die Innenfläche eines oder mehrerer der Antriebselemente (3), des ersten Verbindungsmittels (12) und des zweiten Verbindungsmittels (22) mit einer zusätzlichen Lage versehen ist.

10. Antriebswerkzeug nach einem der Ansprüche 1 bis 9, **dadurch gekennzeichnet, dass** die Anordnung aus dem ersten Verbindungsmittel (12), dem zweiten Verbindungsmittel (22) und dem Antriebselement (3) händisch aus dem Antriebswerkzeug (1) entfernt werden kann.

11. Maschine (M) zur Bearbeitung einer Stange (R), **dadurch gekennzeichnet, dass** sie ein erstes (1) und ein zweites (1') Antriebswerkzeug nach einem der Ansprüche 1 bis 8 umfasst, die koaxial auf einem Halter (4) derart angeordnet sind, dass sie unabhängig voneinander auf dem Halter (4) entlang der Längsachse XX', die der Längsachse der Stange (R) entspricht, gleiten können.

12. Maschine nach Anspruch 11, **dadurch gekennzeichnet, dass** sie ferner eine Steuereinheit (U) umfasst, die ausgebildet ist, mindestens eines der ersten (1) und zweiten (1') Antriebswerkzeuge zu steuern.

13. Maschine nach Anspruch 12, **dadurch gekennzeichnet, dass** die Steuereinheit (U) eine Frequenzmodulationseinheit (U1) umfasst oder mit ihr verbunden ist und eine Amplitudenmodulationseinheit (U2) umfasst oder mit ihr verbunden ist.

14. Verfahren zur Bearbeitung einer Stange (R), wobei die Stange (R) abwechselnd von einem ersten und einem zweiten Antriebswerkzeug in Drehung versetzt und einem Bearbeitungswerkzeug (T) zugeführt wird, wobei das Verfahren umfasst:

    - einen Bearbeitungsschritt (H1), bei dem die Stange (R) durch das erste Antriebswerkzeug (1) eingespannt und in Drehung versetzt wird, während sie durch das zweite Antriebswerkzeug (1') freigegeben wird, und bei dem das erste Antriebswerkzeug (1) entlang des Rahmens (4) in einer kontrollierten, für die Bearbeitungsvorgänge geeigneten Weise verschoben wird,
    - einen Vorschubschritt (H2), bei dem die Stange (R) von dem zweiten Antriebswerkzeug (1') eingespannt und in Drehung versetzt wird, während sie von dem ersten Antriebswerkzeug (1) freigegeben wird, und bei dem das zweite Werkzeug (1') auf dem Rahmen (4) verschoben wird, um die Stange (R) in Richtung des Bearbeitungswerkzeugs (T) vorzuschieben,

    wobei jedes der ersten (1) und zweiten (1') Antriebswerkzeuge einen ersten Stator (10), einen ersten Rotor (11), der durch den ersten Stator (10) gedreht wird, ein erstes Verbindungsmittel (12), das durch den ersten Rotor (12) angetrieben wird, einen zweiten Stator (20), einen zweiten Rotor (21), der durch den zweiten Stator (20) gedreht wird ein zweites Verbindungsmittel (22), das durch den zweiten Rotor (21) angetrieben wird, und ein elastisch verformbares Antriebselement (3), das mit dem ersten Verbindungsmittel (12) und dem zweiten Verbindungsmittel (22) verbunden ist, und wobei die Freigabe der Stange (R) aus einem Versatz der relativen Winkelstellung des ersten (11) und des zweiten (12) Rotors resultiert.

15. Verfahren nach Anspruch 14, **dadurch gekennzeichnet, dass** der Bearbeitungsschritt (H1) einen Ausrüstungsschritt (H3) umfasst, bei dem das zweite Antriebswerkzeug (1') entlang des Rahmens (4) in eine Position zurückbewegt wird, die ausgebildet ist, die Stange (R) während eines Vorschubschritts (H2) in Richtung des Bearbeitungswerkzeugs (T) vorzuschieben.

16. Verfahren nach Anspruch 14 oder 15, **dadurch gekennzeichnet, dass** entweder der Bearbeitungsschritt (H1) oder der Vorschubschritt (H2) oder beide einen Steuerschritt (H4) umfassen, wobei das tatsächliche Anzugsdrehmoment bestimmt wird und wobei das angelegte Anzugsdrehmoment in Abhängigkeit von dem bestimmten Anzugsdrehmoment moduliert wird.

17. Verfahren nach Anspruch 15 bis 16, **dadurch gekennzeichnet, dass** mindestens einer von einem niedrigen Schwellenwert und einem hohen Schwellenwert des Anzugsdrehmoments vorgegeben wird, wobei jeder der niedrigen und hohen Anzugsdrehmomentwerte ein zulässiges Anzugsdrehmoment definiert, und dass das angelegte Anzugsdrehmoment auf das zulässige Anzugsdrehmoment begrenzt wird.

**Revendications**

1. Un outil d'entraînement (1) pour entraîner une barre (R) en rotation, comprenant un premier stator (10), un premier rotor (11) entraîné en rotation par le premier stator (10), un premier moyen de connexion (12) entraîné par le premier rotor (11) et un élément d'entrainement (3) ayant une première extrémité (31) reliée mécaniquement au premier moyen de connexion (12) et une seconde extrémité (32),
   **Caractérisé en ce qu'**il comprend en outre un second stator (20), un second rotor (21) entraîné en rotation par le second stator (20), un second moyen de connexion (22) entraîné par le second rotor (21) dans lequel le second moyen de connexion (22) est mécaniquement relié à la deuxième extrémité (32) de l'élément moteur (3), **en ce que** l'élément d'entrainement (3) est un élément creux élastiquement déformable dont le diamètre peut être modifié en fonction de la position angulaire relative de sa première extrémité (31) et sa deuxième extrémité (32), et **en ce que** la position angulaire relative du premier rotor (11) et du second rotor (21) peut varier de manière à modifier la position angulaire relative de la première extrémité (31) et de la deuxième extrémité (32) de l'élément d'entrainement (3).

2. Outil d'entraînement selon la revendication 1, **caractérisé en ce que** le diamètre intérieur de l'élément d'entraînement (3) peut varier entre une première valeur et une deuxième valeur.

3. Outil d'entraînement selon la revendication 2, **caractérisé en ce que** la première valeur du diamètre de l'élément d'entraînement (3) est son diamètre intérieur naturel (d3), et que la deuxième valeur correspond à un diamètre intérieur étendu (d3') supérieur au diamètre intérieur naturel (d3).

4. Outil d'entraînement selon les revendications 2 ou 3, **caractérisé en ce que** la deuxième valeur du diamètre intérieur de l'élément d'entraînement (3) résulte d'une variation de la position angulaire relative du premier rotor (11) et du deuxième rotor (21).

5. Outil d'entraînement selon l'une quelconque des revendications 1 à 5, **caractérisé en ce que** le diamètre intérieur naturel (d3) de l'élément d'entraînement (3) est égal ou inférieur au diamètre (RD) de la barre (R).

6. Outil d'entraînement selon l'une quelconque des revendications 1 à 5, **caractérisé en ce que** l'élément d'entraînement (3) est un ressort de torsion.

7. Outil d'entraînement selon l'une quelconque des revendications 1 à 6, **caractérisé en ce que** la variation de la position angulaire relative de la première (31) et de la deuxième (32) extrémité de l'élément d'entraînement (3) résulte d'une modulation de l'une ou des deux de la fréquence et de l'amplitude des signaux envoyés à au moins l'un des premier (10) et second (20) stators.

8. Outil d'entraînement selon l'une quelconque des revendications 1 à 7, **caractérisé en ce qu'**il comporte en outre au moins un capteur de couple de serrage.

9. Outil d'entraînement selon l'une quelconque des revendications 1 à 8, **caractérisé en ce que** la surface interne d'un ou plusieurs des éléments d'entraînement (3), du premier moyen de connexion (12) et du second moyen de connexion (22) est munie d'une couche supplémentaire.

10. Outil d'entraînement selon l'une quelconque des revendications 1 à 9, **caractérisé en ce que** l'ensemble du premier moyens de connexion (12), du second moyen de connexion (21) et de l'élément d'entraînement (3) peut être retiré manuellement de l'outil d'entraînement (1).

11. Une machine (M) adaptée à l'usinage d'une barre (R), **caractérisée en ce qu'**elle comprend un premier (1) et un second (1') outils d'entraînement selon les revendications 1 à 8, disposés coaxialement sur un support (4) de manière à pouvoir coulisser indépendamment sur le support (4) selon l'axe longitudinal XX' correspondant à l'axe longitudinal de la barre (R).

12. Machine selon la revendication 11, **caractérisée en ce qu'**elle comprend en outre une unité de commande (U), adaptée pour commander au moins un desdits premier (1) et second (1') outils d'entraînement.

13. Machine selon la revendication 12, **caractérisée en ce que** ladite unité de commande (U) comprend ou est reliée à une unité de modulation de fréquence (U1) et comprend ou est reliée à une unité de modulation d'amplitude (U2).

14. Procédé d'usinage d'une barre (R) dans lequel la barre (R) est alternativement entraînée en rotation par un premier et un second outil d'entraînement et amenée à un outil d'usinage (T), le procédé comprenant :

- une étape d'usinage (H1), dans laquelle la barre (R) est serrée et entraînée en rotation par le premier outil d'entraînement (1), tout en étant relâchée par le second outil d'entraînement (1'), et dans laquelle le premier outil d'entraînement (1) est translaté le long du bâti (4) d'une manière contrôlée adaptée aux opérations d'usinage,

- une étape d'alimentation (H2), dans laquelle la barre (R) est serrée et entraînée en rotation par le second outil d'entraînement (1'), tout en étant relâchée par le premier outil d'entraînement (1), et dans laquelle le deuxième outil (1') est translaté sur le bâti (4) de manière à amener la barre (R) vers l'outil d'usinage (T),

dans lequel chacun des premier (1) et second (1') outils d'entraînement comprend un premier stator (10), un premier rotor (11) entraîné en rotation par le premier stator (10), un premier moyen de connexion (12) entraîné par le premier rotor (12), un second stator (20), un second rotor (21) entraîné en rotation par le second stator (20), un second moyen de connexion (22) entraîné par le second rotor (21), et un élément d'entraînement élastiquement déformable (3), relié au premier moyen de connexion (12) et au second moyen de connexion (22), et dans laquelle la libération de la barre (R) résulte d'un décalage de la position angulaire relative du premier (11) et du second (12) rotors.

15. Procédé selon la revendication 14, **caractérisé en ce que** l'étape d'usinage (H1) comprend une étape d'armement (H3), dans laquelle le second outil d'entraînement (1') est ramené en translation le long du bâti (4) à une position adaptée pour amener la barre (R) vers l'outil d'usinage (T) lors d'une étape d'alimentation (H2).

16. Procédé selon les revendications 14 ou 15, **caractérisé en ce que** l'une ou les deux parmi l'étape d'usinage (H1) et l'étape d'alimentation (H2) comprend une étape de contrôle (H4), dans laquelle le couple de serrage réel est déterminé et dans laquelle le couple de serrage appliqué est modulé en réponse au couple de serrage déterminé.

17. Procédé selon la revendication 15 à 16, **caractérisé en ce qu'**au moins l'une parmi une valeur de seuil bas et une valeur de seuil haut du couple de serrage est prédéterminée, chacune des valeurs de couple de serrage bas et haut délimitant un couple de serrage autorisé, et **en ce que** le couple de serrage appliqué est limité au couple de serrage autorisé.

Fig. 1

Clamped
Driving Tool

Released
Driving Tool

Fig. 2

Fig. 3a

Fig. 3b

22    223    32    3    31    12    R

d22    d22'    d22    d12    R_D

224    224

Fig. 3c

22    221    32    3    31    12    121    R

R_D

Fig. 3d

Fig. 4

Fig. 5

Fig. 6

**EP 4 069 463 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016040733 A1
- JP 2001225215 A